(19) Europäisches Patentamt / European Patent Office / Office européen des brevets

(11) **EP 3 485 248 B1**

(12) **FASCICULE DE BREVET EUROPEEN**

(45) Date de publication et mention de la délivrance du brevet:
**18.01.2023   Bulletin 2023/03**

(21) Numéro de dépôt: **17740684.0**

(22) Date de dépôt: **06.07.2017**

(51) Classification Internationale des Brevets (IPC):
**G01J 9/02** *(2006.01)*

(52) Classification Coopérative des Brevets (CPC):
**G01J 9/0246**

(86) Numéro de dépôt international:
**PCT/EP2017/067017**

(87) Numéro de publication internationale:
**WO 2018/011063 (18.01.2018 Gazette 2018/03)**

(54) **PROCÉDÉ ET DISPOSITIF DE CARACTÉRISATION D'UNE SOURCE OPTIQUE**

VERFAHREN UND VORRICHTUNG ZUR CHARAKTERISIERUNG EINER OPTISCHEN QUELLE

PROCESS AND DEVICE FOR CHARACTERISING AN OPTICAL SOURCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **12.07.2016   FR 1656663**

(43) Date de publication de la demande:
**22.05.2019   Bulletin 2019/21**

(73) Titulaire: **Blue Industry and Science
75010 Paris (FR)**

(72) Inventeurs:
• **GEORGES DES AULNOIS, Johann
78000 Versailles (FR)**
• **SZYMANSKI, Benjamin
75005 Paris (FR)**
• **HARDY-BARANSKI, Bertrand
78400 Chatou (FR)**
• **GEORGES DES AULNOIS, Johann
78000 Versailles (FR)**

(74) Mandataire: **IPAZ
Bâtiment Platon
Parc Les Algorithmes
91190 Saint-Aubin (FR)**

(56) Documents cités:
**US-A- 6 088 142     US-A1- 2006 215 167
US-B1- 6 498 800**

**Description**

**Domaine technique**

La présente invention concerne un procédé de caractérisation d'une source optique. Elle concerne aussi un dispositif de caractérisation d'une source optique, et un système comprenant un tel dispositif.
Un tel dispositif permet à un utilisateur de caractériser une source optique, par exemple une longueur d'onde d'un rayonnement émis par cette source optique.

**Etat de la technique antérieure**

Le document US 6 498 800 décrit un dispositif de stabilisation en fréquence en utilisant deux ISL de deux Fabry Perrot.
Le document US 2006//215167 décrit un dispositif dont l'une des idées est de combiner trois niveaux de mesure de plus en plus fins (un filtre linéaire + deux étalons).
On connaît différents dispositifs selon l'état de l'art pour mesurer une longueur d'onde d'un rayonnement émis par une source optique.
Ces dispositifs nécessitent d'explorer une plage de longueurs d'onde possibles afin de déterminer quelle est la longueur d'onde, parmi celles de la plage, qui est émise par la source. Cette exploration peut se faire typiquement :

- avec une solution coûteuse, et exploration par barrette de photodiodes. Des solutions existantes proposent des configurations de Fabry-Perot sans pièces mécaniques mobiles, mais avec des barrettes comme détecteur. L'aspect sans pièces mobiles est un avantage certain pour la robustesse et la fiabilité. Par contre, l'usage de barrettes de détection est un inconvénient au niveau du coût, surtout lorsqu'il s'agit d'aller mesurer des longueurs d'onde au-delà de 1100 nm et que le silicium n'est plus utilisable. Il faut alors s'orienter vers des matériaux plus onéreux comme l'InGaAs pour les longueurs d'onde télécom ou encore du PbSe ou MCT pour le moyen infrarouge. Les barrettes coûtent typiquement plusieurs milliers d'euros.
- avec une solution lente, et exploration par Fabry Perot accordable. Des solutions à Fabry-Perot accordables n'utilisent pas de barrettes mais seulement une ou plusieurs photodiodes. Cependant, pour réaliser l'exploration souhaitée et obtenir l'information souhaitée (position du pic de transmission du Fabry-Perot), il faut déplacer un des miroirs du Fabry Perrot. Ce balayage ralentit fortement la mesure. Il faut en effet faire une acquisition pour chaque position du miroir, au lieu d'acquérir tout l'interférogramme simultanément dans le cas de l'utilisation de détecteurs barrettes. Pour un temps de réponse typique de 0,1 ms et une mesure de 100 positions de miroirs le temps minimal d'une mesure est alors de 10 ms limitant le taux de rafraîchissement à 100 Hz (sans compter les temps de traitement)

Le but de la présente invention est de proposer un procédé et/ou un dispositif de caractérisation d'une source optique qui permette une caractérisation plus économique et/ou plus rapide que l'état de l'art.

**Exposé de l'invention**

Cet objectif est atteint avec un procédé selon la revendication 1. de
La constante peut par exemple, dans le procédé selon l'invention, être calculée ou déterminée ou enregistrée avant l'étape d'élimination. La constante peut être saisie par exemple par un utilisateur avant l'étape d'élimination.
L'intervalle spectral libre de la cavité fixe peut par exemple, dans le procédé selon l'invention, être enregistré avant l'étape d'élimination. L'intervalle spectral libre de la cavité fixe peut être saisi par exemple par un utilisateur avant l'étape d'élimination.
Les différents états de la source se distinguent de préférence par une différence d'un paramètre physique de la source qui influe sur une longueur d'onde du premier rayonnement émis par la source.
Chaque capteur ne comprend de préférence pas de barrette de photodiodes.
L'étalon Fabry Perot de chaque capteur ne comprend de préférence aucune partie mobile.
La première donnée illustrant la longueur d'onde du premier rayonnement peut être :

- la longueur d'onde du premier rayonnement, ou
- la fréquence temporelle du premier rayonnement, ou
- la période temporelle du premier rayonnement, ou
- le nombre d'onde du premier rayonnement.

La sélection peut éliminer en outre les valeurs de la première donnée situées en dehors d'un intervalle de zone spectrale du premier rayonnement. Dans ce cas :

- chaque étalon Fabry Perot peut avoir une courbe de transmission de l'intensité du premier rayonnement, en fonction de la longueur d'onde du premier rayonnement, ayant de préférence une période supérieure ou égale à l'intervalle de zone spectrale du premier rayonnement, et/ou
- la réception d'au moins une partie du premier rayonnement comprend de préférence une réception par plusieurs capteurs comprenant chacun un étalon Fabry Perot suivi d'une photodiode, chaque étalon Fabry Perot ayant une courbe de transmission de l'intensité du premier rayonnement en fonction de la longueur d'onde du premier rayonnement, l'assemblage des courbes de transmission des différents étalons Fabry Perot formant une courbe globale de transmission de l'intensité du premier rayonnement, en fonction de la longueur d'onde du premier rayonnement, ayant de préférence une période supérieure ou égale à l'intervalle de zone spectrale du premier rayonnement.

L'au moins un capteur comprend de préférence plusieurs capteurs, les différents étalons Fabry Perot des différents capteurs comprenant de préférence aux moins un couple de deux étalons Fabry Perot dont :

- un premier étalon Fabry Perot ayant une première courbe de transmission de l'intensité du premier rayonnement, en fonction de la longueur d'onde du premier rayonnement, et
- un deuxième étalon Fabry Perot ayant une deuxième courbe de transmission de l'intensité du premier rayonnement, en fonction de la longueur d'onde du premier rayonnement,

de sorte que :

- une même longueur d'onde du premier rayonnement correspond à la fois à un maximum de pente de la première courbe de transmission et à une pente de la deuxième courbe de transmission inférieure ou égale, en valeur absolue, à 10% de ce maximum de pente, et/ou
- une même longueur d'onde du premier rayonnement correspond à la fois à un maximum de pente de la deuxième courbe de transmission et à une pente de la première courbe de transmission inférieure ou égale, en valeur absolue, à 10% de ce maximum de pente.

Le procédé selon l'invention peut comprendre, avant la sélection éliminant les valeurs de la première donnée ne correspondant pas à la constante modulo l'intervalle spectral libre de la cavité fixe, une détermination ou une connaissance de la constante. La détermination de la constante peut comprendre, dans le cas d'une génération du premier rayonnement par la source selon différents états explorés de la source :

- un calcul préliminaire de la première donnée pour chaque état exploré de la source, et
- à partir du premier calcul préliminaire de la première donnée pour l'ensemble de différents états explorés de la source, une détermination de la constante.

La sélection d'une valeur sélectionnée de la première donnée peut comprendre, après l'élimination des valeurs de la première donnée ne correspondant pas à une constante modulo l'intervalle spectral libre de la cavité, une sélection finale de la valeur sélectionnée, de préférence par une méthode des moindres carrés.

La source peut être un oscillateur paramétrique optique ou un laser.

La source peut être une source au moins doublement résonnante, comprenant deux cavités partageant un même cristal de génération de rayonnement, dont:

- une cavité mobile générant le premier rayonnement, et
- la cavité fixe générant un deuxième rayonnement.

Le procédé selon l'invention peut comprendre en outre un calcul, pour chaque état exploré de la source, d'une deuxième donnée représentative de la longueur d'onde du deuxième rayonnement en fonction du calcul de la première donnée représentative de la longueur d'onde du premier rayonnement.

Selon une autre particularité de l'invention, il est proposé un dispositif selon la revendication 15

L'unité de calcul est de préférence agencée et/ou programmée pour connaitre la constante.

Le dispositif selon l'invention peut comprendre des moyens pour calculer ou déterminer ou enregistrer la constante. Le dispositif selon l'invention peut comprendre des moyens de communication ou des moyens de saisie agencés pour indiquer au dispositif selon l'invention la constante.

Le dispositif selon l'invention peut comprendre des moyens pour enregistrer l'intervalle spectral libre de la cavité fixe. Le dispositif selon l'invention peut comprendre des moyens de communication ou des moyens de saisie agencés pour indiquer au dispositif selon l'invention l'intervalle spectral libre de la cavité fixe.

Les différents états de la source se distinguent de préférence par une différence d'un paramètre physique de la source qui influe sur une longueur d'onde du premier rayonnement émis par la source.

La source ne fait de préférence pas partie du dispositif selon l'invention.

L'unité de calcul peut être agencée et/ou programmée pour commander dans quel état se trouve la source et/ou recevoir des informations sur l'état de la source ou les différents états explorés de la source.

L'unité de calcul peut être en outre agencée et/ou programmée pour :

- commander dans quel état se trouve la source et/ou recevoir des informations sur l'état de la source ou les différents états explorés de la source, et
- associer ou synchroniser chaque état exploré de la source avec le signal mesuré par chaque capteur pour cet état exploré de la source.

Chaque capteur ne comprend de préférence pas de barrette de photodiodes.

L'étalon Fabry Perot de chaque capteur ne comprend de préférence aucune partie mobile.

La première donnée illustrant la longueur d'onde du premier rayonnement peut être :

- la longueur d'onde du premier rayonnement, ou
- la fréquence temporelle du premier rayonnement, ou
- la période temporelle du premier rayonnement, ou
- le nombre d'onde du premier rayonnement.

L'unité de calcul peut être agencée et/ou programmée pour réaliser la sélection en éliminant en outre les valeurs de la première donnée situées en dehors d'un intervalle de zone spectrale du premier rayonnement. Dans ce cas :

- chaque étalon Fabry Perot peut avoir une courbe de transmission de l'intensité du premier rayonnement, en fonction de la longueur d'onde du premier rayonnement, ayant de préférence une période supérieure ou égale à l'intervalle de zone spectrale du premier rayonnement.
- l'au moins un capteur peut comprendre plusieurs capteurs comprenant chacun un étalon Fabry Perot suivi d'une photodiode, chaque étalon Fabry Perot ayant une courbe de transmission de l'intensité du premier rayonnement en fonction de la longueur d'onde du premier rayonnement, l'assemblage des courbes de transmission des différents étalons Fabry Perot formant une courbe globale de transmission de l'intensité du premier rayonnement, en fonction de la longueur d'onde du premier rayonnement, ayant de préférence une période supérieure ou égale à l'intervalle de zone spectrale du premier rayonnement.

L'au moins un capteur comprend de préférence plusieurs capteurs, les différents étalons Fabry Perot des différents capteurs comprenant de préférence aux moins un couple de deux étalons Fabry Perot dont :

- un premier étalon Fabry Perot ayant une première courbe de transmission de l'intensité du premier rayonnement, en fonction de la longueur d'onde du premier rayonnement, et
- un deuxième étalon Fabry Perot ayant une deuxième courbe de transmission de l'intensité du premier rayonnement, en fonction de la longueur d'onde du premier rayonnement,

de sorte que :

- une même longueur d'onde du premier rayonnement correspond à la fois à un maximum de pente de la première courbe de transmission et à une pente de la deuxième courbe de transmission inférieure ou égale, en valeur absolue, à 10% de ce maximum de pente, et/ou
- une même longueur d'onde du premier rayonnement correspond à la fois à un maximum de pente de la deuxième courbe de transmission et à une pente de la première courbe de transmission inférieure ou égale, en valeur absolue, à 10% de ce maximum de pente.

L'unité de calcul peut être agencée et/ou programmée pour, avant d'effectuer la sélection éliminant les valeurs de la première donnée ne correspondant pas à la constante modulo l'intervalle spectral libre de la cavité fixe, déterminer ou avoir une connaissance de la constante. L'unité de calcul peut être, pour déterminer la constante, agencée et/ou programmée pour :

- calculer de manière préliminaire la première donnée pour chaque état exploré de la source, et

- à partir du calcul préliminaire de la première donnée pour l'ensemble de différents états explorés de la source, déterminer la constante.

L'unité de calcul peut être agencée et/ou programmée pour réaliser la sélection comprenant, après l'élimination des valeurs de la première donnée ne correspondant pas à une constante modulo l'intervalle spectral libre, une sélection finale de la valeur sélectionnée, de préférence par une méthode des moindres carrés. L'unité de calcul peut être agencée et/ou programmée pour calculer, pour chaque état exploré de la source, une deuxième donnée représentative de la longueur d'onde du deuxième rayonnement en fonction du calcul de la première donnée représentative de la longueur d'onde du premier rayonnement.

Suivant encore un autre aspect de l'invention, il est proposé un système, comprenant :

- une source optique comprenant une cavité fixe ayant un intervalle spectral libre, ladite source étant agencée pour générer un premier rayonnement selon un état de la source ou selon différents états explorés de la source, et
- un dispositif de caractérisation de cette source selon l'invention. La source peut être un oscillateur paramétrique optique ou un laser.

La source peut être une source au moins doublement résonnante, comprenant deux cavités partageant un même cristal de génération de rayonnement, dont:

- une cavité mobile générant le premier rayonnement, et
- la cavité fixe générant un deuxième rayonnement.

**Description des figures et modes de réalisation**

D'autres avantages et particularités de l'invention apparaîtront à la lecture de la description détaillée de mises en œuvre et de modes de réalisation nullement limitatifs, et des dessins annexés suivants :

- la figure 1 est une vue schématique d'un mode de réalisation préféré de système selon l'invention 100 comprenant un mode de réalisation préféré de dispositif selon l'invention 10,
- la figure 2 illustre les courbes de transmission des trois Fabry-Perots 5 du dispositif 10 dans la zone spectrale 15 d'émission de la source 1 du dispositif 10 ; les bruits de mesure sont schématisés par des traits verticaux sur ces courbes,
- la figure 3 illustre une séquence de sauts de modes émis par la source 1 du système 100 lors du déplacement d'un miroir 7a de la source 1,
- la figure 4 illustre, pendant cette séquence, les valeurs du nombre d'onde de la figure 3 modulo l'intervalle spectral libre (ISL) de la cavité fixe 2 de la source 1,
- la figure 5 illustre différentes valeurs d'un nombre d'onde

  • calculées selon l'invention avant la prise en compte du modulo de l'ISL (ronds) et
  • des modes réellement émis (points)

- la figure 6 illustre, dans le cas des valeurs de la figure 5, la différence entre les mesures calculées et les nombres d'onde effectivement émis,
- la figure 7 illustre la différence entre les mesures calculées ou simulées après restriction des nombres d'onde possiblement émis et les nombres d'onde effectivement émis :

  • avant le calcul du modulo (ronds) et
  • après le calcul du modulo (étoiles),

- la figure 8 illustre l'erreur moyenne observée sur mille séquences de sauts de modes avec un bruit de mesure aléatoire en utilisant la connaissance de l'ISL (courbe 82) et sans utiliser la connaissance de l'ISL (courbe 81), et
- la figure 9 illustre l'écart-type à $3\times\sigma$ de l'erreur observée sur mille séquences de sauts de modes avec un bruit de mesure aléatoire en utilisant la connaissance de l'ISL (courbe 92) et sans utiliser la connaissance de l'ISL (courbe 91).

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

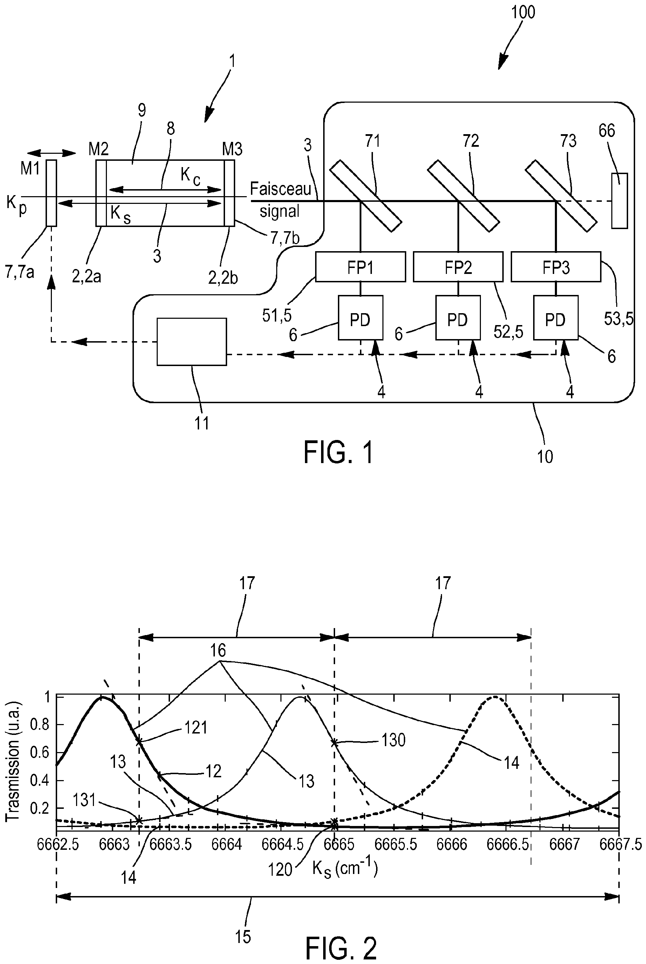

On va tout d'abord décrire, en référence aux figures 1 et 2, un système 100 selon l'invention comprenant un dispositif 10 selon l'invention.

Le système 100 comprend une source optique 1 comprenant une cavité fixe 2 délimitée par deux miroirs 2a, 2b et ayant un intervalle spectral libre, ladite source étant agencée pour générer, selon un état de la source ou selon différents états explorés de la source, un premier rayonnement 3 qui dépend de l'état de la source lors de la génération de ce rayonnement 3.

L'intervalle spectral libre correspond à la distance (en longueur d'onde, fréquence, période, nombre d'onde, etc...) entre deux pics de résonnance successifs de la cavité 2.

La source 1 est typiquement un oscillateur paramétrique optique (OPO) ou un laser.

La source 1 est une source au moins doublement résonnante, comprenant deux cavités partageant un même cristal 9 de génération de rayonnement, dont:

- une cavité mobile 7, délimitée par deux miroirs 7a, 7b et générant le premier rayonnement 3, et
- la cavité fixe 2 générant un deuxième rayonnement 8.

La source 1 doublement résonante comprend le cristal non linéaire 9 et trois miroirs 7a et 2a et 2b/7b dont deux (2a et 2b/7b) déposés directement sur le cristal 9 et un miroir mobile 7a.

Un de ces trois miroirs 2b/7b est commun aux deux cavités 2 et 7.

Dans la présente description, différents « états » de la source 1 se distinguent par une différence d'un paramètre physique de la source 1 qui influe sur la longueur d'onde du premier rayonnement 3 émis par la source 1.

Dans la présente description de la figure 1, nous allons considérer le cas non limitatif où les différents états de la source 1 se différencient par différentes positions du miroir 7a.

On explore plusieurs états de la source 1 de manière à faire varier la longueur d'onde du premier rayonnement 3 (même si différents états de la source 1 peuvent correspondre à la même longueur d'onde du premier rayonnement 3) mais en conservant l'intervalle spectral libre de la cavité 2.

On va par la suite considérer le cas particulier mais non limitatif d'une source 1 qui est un oscillateur paramétrique optique doublement résonnant.

La source 1 est par exemple une source de référence X-FLR8 fabriquée par Blue Industry and Science.

Le système 100 comprend en outre le dispositif 10 selon l'invention de caractérisation de cette source 1.

Le dispositif 10 comprend au moins un capteur 4 (de préférence au moins deux ou idéalement au moins trois capteurs 4), chaque capteur 4 étant agencé pour recevoir au moins une partie du premier rayonnement 3 généré par la source 1 selon un état de la source ou différents états explorés de la source 1, chaque capteur 4 comprenant un étalon Fabry Perot 5 suivi d'une photodiode 6.

Chaque capteur 4 est agencé pour mesurer un signal pour chaque état exploré de la source 1 en fonction de l'au moins une partie du premier rayonnement 3 reçue par ce capteur 4 à cet état exploré de la source.

Le dispositif 10 comprend au moins un miroir 71, 72 ; 73 semi réfléchissant et/ou dichroïque agencé pour répartir le rayonnement 3 vers les différents capteurs 4.

L'intensité lumineuse de chacune des parties du rayonnement 3 arrivant juste en amont de chacun des capteurs 4, c'est à dire :

- entre le miroir (ou dichroïque) 71 et le Fabry Perot 51 pour le premier capteur,
- entre le miroir (ou dichroïque) 72 et le Fabry Perot 52 pour le deuxième capteur,
- entre le miroir (ou dichroïque) 73 et le Fabry Perot 53 pour le troisième capteur,
  est connue soit par calibration initiale (typiquement lors de la fabrication du dispositif 10 ou en usine) ou en utilisant :

- un capteur optionnel de référence 66 (sans Fabry Perot) agencé pour mesurer une intensité d'une partie du rayonnement 3 sans Fabry Perot, et
- une connaissance des coefficients de réflexion et de transmission de chacun des miroirs 71, 72, et 73.

Chaque photodiode 6, 66 est par exemple une photodiode de référence G6854-01 fabriquée par Hamamatsu.

Chaque étalon 5 est par exemple un étalon de la gamme OP-7423 fabriqué par Light machinery.

Chaque capteur 4 ne comprend pas de barrette de photodiodes, mais comprend une unique photodiode 6.

L'étalon Fabry Perot 5 de chaque capteur 4 ne comprend aucune partie mobile.

Le dispositif 10 comprend une unité de calcul 11.

L'unité 11 ne comprend que des moyens techniques, de préférence des moyens électroniques et/ou informatiques et/ou logiciels.

L'unité de calcul 11 est agencée et/ou programmée pour :

- commander dans quel état se trouve la source 1 et/ou recevoir des informations sur l'état de la source 1 ou les différents états explorés de la source 1, et
- associer ou synchroniser chaque état exploré de la source 1 avec le signal mesuré par chaque capteur 4 pour cet état exploré de la source 1.

Ainsi le signal de chaque photodiode 6 donne une information sur la transmission du rayonnement 3 à travers chaque Fabry Perot.

L'unité de calcul 11 est agencée et/ou programmée pour calculer, à partir des signaux mesurés par chaque capteur 4 et pour chaque état exploré de la source 1, une première donnée (par exemple $k_s$) représentative de la longueur d'onde du premier rayonnement 3 pour chaque état exploré de la source 1, l'unité de calcul 11 étant agencée et/ou programmée pour réaliser une sélection, pour chaque état exploré de la source 1 d'une valeur sélectionnée de la première donnée (par exemple $k_s$) parmi plusieurs valeurs possibles.

La première donnée illustrant la longueur d'onde du premier rayonnement est une donnée qui dépend ou est une fonction de la longueur d'onde du premier rayonnement.

La première donnée illustrant la longueur d'onde du premier rayonnement est par exemple:

- la longueur d'onde du premier rayonnement, ou
- la fréquence temporelle du premier rayonnement, ou
- la période temporelle du premier rayonnement, ou
- comme décrit dans cet exemple illustratif mais non limitatif, le nombre d'onde $k_s$ du premier rayonnement 3.

La première donnée illustrant la longueur d'onde du premier rayonnement peut aussi être toute donnée proportionnelle à cette longueur d'onde du premier rayonnement ou cette la fréquence temporelle du premier rayonnement ou cette la période temporelle du premier rayonnement ou ce nombre d'onde $k_s$ du premier rayonnement 3.

Plus exactement, l'unité de calcul 11 est agencée et/ou programmée:

- pour connaitre une constante «b» ; L'unité de calcul 11 est, dans le cas d'une génération du premier rayonnement 3 par la source 1 selon différents états explorés de la source 1, agencée et/ou programmée pour déterminer la constante «b», et pour cela est agencée et/ou programmée pour :

  ◦ calculer de manière préliminaire la première donnée $k_s$ pour chaque état exploré de la source 1, en éliminant des valeurs de la première donnée $k_s$ situées en dehors d'un intervalle 15 de zone spectrale du premier rayonnement 3 et en réalisant une sélection d'une valeur de la première donnée $k_s$ pour chaque état exploré de la source 1, de préférence par une méthode des moindres carrés
  ◦ à partir du calcul préliminaire de la première donnée $k_s$ pour l'ensemble de différents états explorés de la source 1, déterminer la constante «b».

- pour calculer, à partir des signaux mesurés par chaque capteur 4 et pour chaque état exploré de la source 1, la première donnée $k_s$ représentative de la longueur d'onde du premier rayonnement 3 pour chaque état exploré de la source 1, en effectuant une sélection d'une valeur sélectionnée de la première donnée $k_s$ parmi plusieurs valeurs possibles, l'unité de calcul 11 étant agencée et/ou programmée :

  ◦ pour réaliser une élimination (qui fait partie de la sélection) des valeurs de la première donnée $k_s$ situées en dehors de l'intervalle 15 de zone spectrale du premier rayonnement 3
  ◦ pour réaliser une élimination (qui fait partie de la sélection) des valeurs de la première donnée $k_s$ ne correspondant pas à la constante «b» modulo l'intervalle spectral libre de la cavité fixe 2 exprimé selon les unités de la première donnée $k_s$,
  ◦ puis pour réaliser, après les deux précédentes éliminations, une sélection finale (qui fait partie de la sélection) de la valeur sélectionnée, de préférence par une méthode des moindres carrés.

L'unité de calcul 11 est agencée et/ou programmée pour calculer, pour chaque état exploré de la source 1, une deuxième donnée $k_c$ représentative de la longueur d'onde du deuxième rayonnement 8 en fonction du calcul de la première donnée $k_s$ représentative de la longueur d'onde du premier rayonnement 3.

La deuxième donnée $k_c$ illustrant la longueur d'onde du deuxième rayonnement 8 est :

- la longueur d'onde du deuxième rayonnement, ou
- la fréquence du deuxième rayonnement, ou
- comme décrit dans cet exemple illustratif mais non limitatif, le nombre d'onde $k_c$ du deuxième rayonnement 8.

La manière dont est agencée et/ou programmée l'unité de calcul 11 sera décrite ci-dessous plus en détails en référence à un mode de réalisation de procédé selon l'invention mis en œuvre par le dispositif 10.

L'unité de calcul 11 est agencée et/ou programmée pour connaitre la constante b.

Le dispositif 10 comprend des moyens (plus exactement l'unité 11) agencés pour calculer et/ou déterminer et/ou enregistrer la constante b.

Le dispositif 10 comprend des moyens de communication et/ou des moyens de saisie agencés pour indiquer au dispositif 10 (plus exactement à l'unité 11) la constante b.

L'unité de calcul 11 est agencée et/ou programmée pour connaitre l'intervalle spectral libre de la cavité fixe 2.

Le dispositif 10 comprend :

- des moyens (plus exactement l'unité 11) pour enregistrer l'intervalle spectral libre de la cavité fixe 2, et/ou
- des moyens de communication et/ou des moyens de saisie agencés pour indiquer au dispositif 10 (plus exactement à l'unité 11) l'intervalle spectral libre de la cavité fixe 2.

Les moyens de communication ou de saisie ne sont pas obligatoires, notamment car le dispositif 10 peut être dédié à ne faire des mesures que sur un seul type ou une seule référence de source 1 dont l'intervalle spectral libre de la cavité fixe ne varie pas d'une source 1 à une autre 1.

La source 1 ne fait de préférence pas partie du dispositif 10. Le dispositif 10 peut être commercialisé comme dispositif de caractérisation ou de test d'une source 1 indépendamment de la source 1.

En référence à la figure 2, chaque étalon Fabry Perot 5 a une courbe de transmission 12, 13, 14 de l'intensité du premier rayonnement 3, en fonction de la longueur d'onde du premier rayonnement 3, ayant une période supérieure ou égale à l'intervalle 15 de zone spectrale du premier rayonnement 3.

Chaque étalon Fabry Perot 5 a une courbe de transmission 12, 13, 14 de l'intensité du premier rayonnement 3 en fonction de la longueur d'onde du premier rayonnement 3, l'assemblage des courbes de transmission des différents étalons Fabry Perot 5 formant une courbe globale 16 de transmission de l'intensité du premier rayonnement, en fonction de la longueur d'onde du premier rayonnement 3, ayant une période supérieure ou égale à l'intervalle 15 de zone spectrale du premier rayonnement.

L'au moins un capteur 4 comprend plusieurs capteurs 4, les différents étalons Fabry Perot 5 des différents capteurs 4 comprenant aux moins un couple de deux étalons Fabry Perot 5 (de préférence uniquement des couples d'étalons Fabry Perot), chaque couple comprenant :

- un premier étalon Fabry Perot ayant une première courbe de transmission 13 de l'intensité du premier rayonnement 3, en fonction de la longueur d'onde du premier rayonnement 3, et
- un deuxième étalon Fabry Perot ayant une deuxième courbe de transmission 12 de l'intensité du premier rayonnement 3, en fonction de la longueur d'onde du premier rayonnement 3,

de sorte que :

- une même longueur d'onde du premier rayonnement 3 correspond à la fois à un maximum de pente (c'est-à-dire de la dérivée première) 130 de la première courbe de transmission 13 et à une pente 120 de la deuxième courbe de transmission 12 inférieure ou égale, en valeur absolue, à 10% de ce maximum de pente 130, et/ou
- une même longueur d'onde du premier rayonnement 3 correspond à la fois à un maximum de pente 121 de la deuxième courbe de transmission 12 et à une pente 131 de la première courbe 13 de transmission inférieure ou égale, en valeur absolue, à 10% de ce maximum de pente 121.

On remarque que cela est valable pour tous les couples 12, 13 ou 13, 14 ou 14, 12 des courbes de transmission de tous les étalons Fabry Perot 5 du dispositif 10.

On remarque en outre que les maximums de pente 121, 130 de même signe (soit pente croissante soit pente décroissante) des différentes courbes de transmission 12, 13, 14 sont régulièrement espacés par un même intervalle de séparation 17 à l'intérieur de l'intervalle 15.

Ainsi, dans ce mode de réalisation, on utilise des étalons Fabry-Perot 5 (sans pièces mécaniques mobiles) sans imager la figure d'interférences sur un détecteur barrette. On ne fait qu'un seul point de mesure par étage de Fabry-Perot 5.

Pour améliorer la précision on réalise un accord en longueur d'onde dans toute la bande de gain d'émission de la source 1 en ne modifiant qu'une seule cavité 7 de la source cohérente 1. Ainsi, on sait que toutes les longueurs d'onde sont identiques modulo l'ISL de la cavité 2 de la source 1. Cela donne un supplément d'information qui permet de remonter à chacune des longueurs d'onde émises des faisceaux 3, 8.

Ce mode de réalisation a les avantages suivants :

- très compact : la solution peut faire moins de 10 cm de long.
- très rapide : en utilisant une électronique adaptée 11 on peut faire une mesure à chaque impulsion laser (> 100 kHz). L'invention peut fonctionner aussi avec une source 1 continue avec une mesure au maximum de l'électronique 11 de mesure et de traitement des photodiodes 6. L'invention n'est pas limitée par le temps de réponse d'un piézoélectrique qui déplacerait une partie d'un Fabry Perot accordable.
- peu coûteux : il ne comprend pas de composants chers : les étalons Fabry Perot non accordables 5, les photodiodes 6 sans barrette sont très économiques par rapport à un système à barrette

On va maintenant décrire, en référence aux figures 1 à 9, un mode de réalisation de procédé selon l'invention mis en œuvre par le dispositif 10 et par le système 100.

Ce procédé comprend les étapes 1) à 8) décrites ci-après:

1) une génération du premier rayonnement 3 (et du deuxième rayonnement 8) par la source 1 selon un état de la source ou différents états explorés de la source 1. La source cohérente 1 est un OPO doublement résonnant. Un faisceau laser de pompe de nombre d'onde $k_p$ traverse le cristal 9 non linéaire à polarisation périodiquement inversée. Le cristal 9 rayonne deux nouveaux faisceaux : le premier rayonnement 3 (aussi appelé signal) de nombre d'onde $k_s$ et le deuxième rayonnement 8 (aussi appelé complémentaire) de nombre d'onde $k_c$. Les nombres d'onde sont reliés par la loi de conservation de l'énergie qui implique que :

$$k_p = k_s + k_c$$

Comme schématisé à la figure 1, le rayonnement 3 résonne dans la cavité mobile 7 formée par les miroirs 7a et 7b. Le rayonnement 8 résonne dans la cavité fixe 2 entre les miroirs 2a et 2b. La cavité mobile 7 a un intervalle spectral libre (ISL) $\Delta ks$ d'environ 0,26 cm$^{-1}$ (qui dépend de la position du miroir 7a); la cavité fixe 2 a un intervalle spectral libre (ISL) $\Delta kc$ de 0,25 cm$^{-1}$.

Le miroir 7a est mobile, par exemple monté sur un élément piézoélectrique.

L'acceptance spectrale (dite bande de gain paramétrique) typique de la source 1 est de 5 cm$^{-1}$. C'est-à-dire que le cristal non linaire 9 ne peut rayonner que sur une zone du spectre de 5 cm$^{-1}$ si les paramètres suivants sont fixés : nombre d'onde du laser de pompe, température du cristal 9, pas du réseau d'inversion de polarisation , etc...

Le nombre de modes possiblement émis pour une position fixe de la cavité complémentaire est donc de 5/0,25 = 20 modes.

Nous supposerons les nombres d'onde suivants pour chacun des faisceaux :

- nombre d'onde du rayonnement pompe : 9 394,5 cm$^{-1}$ ;
- nombre d'onde « signal » ou du rayonnement 3 : de 6 662,5 cm$^{-1}$ à 6 667,5 cm$^{-1}$ (cet intervalle étant nommé, dans la présente description, l'intervalle 15 de zone spectrale du premier rayonnement);
- nombre d'onde « complémentaire » ou du rayonnement 8: de 2 727 cm$^{-1}$ à 2 732 cm$^{-1}$.

2) une commande, par l'unité 11, de l'état dans lequel se trouve la source 1 et/ou une réception, par l'unité 11, des informations sur l'état de la source 1 ou sur les différents états explorés de la source 1 ; comme expliqué précédemment, on explore différents états de la source 1 en changeant un paramètre physique de la source 1 qui influe sur la longueur d'onde du premier rayonnement 3 émis par la source, par exemple en changeant la position du miroir 7a. On explore plusieurs états de la source 1 de manière à faire varier la longueur d'onde du premier rayonnement 3 (même si différents états de la source 1 peuvent correspondre à la même longueur d'onde du premier rayonnement 3) mais en conservant l'intervalle spectral libre de la cavité fixe 2.

Chacun des faisceaux 3, 8 a un peigne de mode possible dans sa cavité respectivement 7, 2. L'oscillation a lieu si, au sein de la bande de gain paramétrique, il se trouve un recouvrement suffisant entre deux modes signal et complémentaire, c'est-à-dire si la condition de conservation de l'énergie est respectée.

En appliquant une tension sur l'élément piézoélectrique du miroir 7a, la cavité mobile 7 va légèrement bouger de quelques centaines de nanomètres. Le peigne de mode associé va alors se décaler et les coïncidences vont aussi se déplacer au gré des nouveaux recouvrements entre les modes signal du faisceau 1 et complémentaire du faisceau 8.

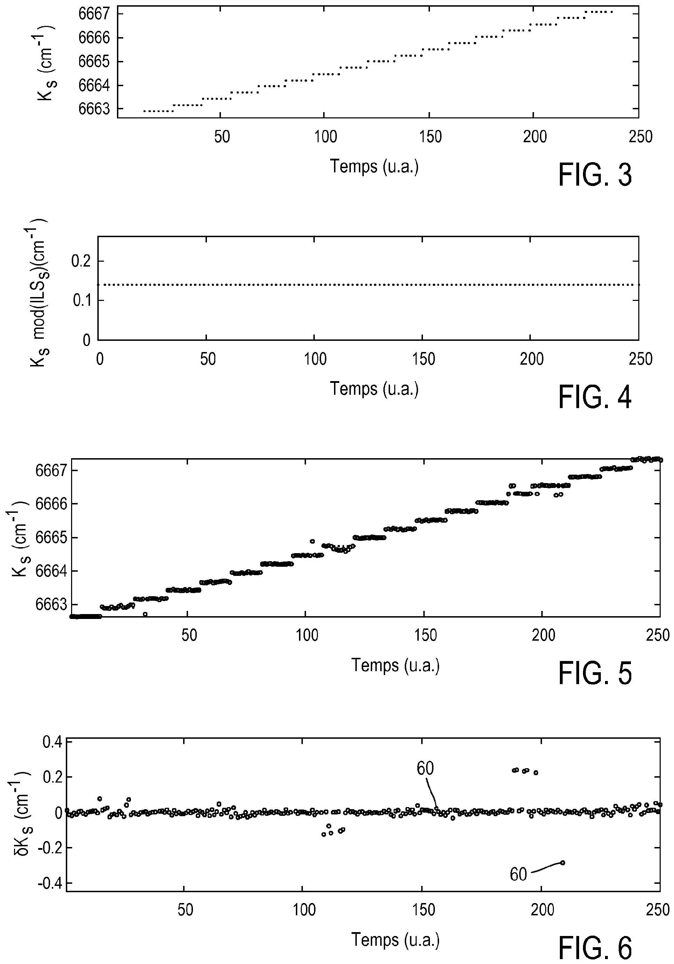

La figure 3 présente un exemple d'une série de sauts de modes $k_s$ effectués par la source 1 lors du déplacement du miroir 7a et la figure 4 présente ces mêmes nombres d'onde $k_s$ modulo l'ISL de la cavité complémentaire 2.

Seul le miroir 7a a bougé. La cavité complémentaire 2 est donc restée fixe. Le peigne des nombres d'onde possiblement émis par la cavité 2 est donc toujours le même. Tous les modes du faisceau 8 sont donc par définition égaux modulo l'ISL de la cavité 2 (nous négligeons ici la dispersion de l'ISL). Par conservation de l'énergie, ceux du faisceau 3 le sont aussi. C'est pourquoi, tous les nombres d'onde du faisceau 8 sont reliés par l'équation 1 et par conservation de l'énergie, ceux du faisceau 3 sont reliés par l'équation 2 :

$$k_c = a \, [ISLc] \qquad \text{équation 1}$$

$$k_s = b \, [ISLc] \qquad \text{équation 2}$$

où chacune parmi « a » et « b » est une constante, plus exactement un nombre réel supérieur ou égal à zéro, la constante « b » étant celle déjà mentionnée précédemment dans la présente description, [ISLc] signifiant « modulo l'ISL de la cavité fixe ISLc», ISLc étant l'ISL de la cavité fixe exprimée avec les unités d'un nombre d'onde (inverse d'une longueur). De manière générale, on notera que ce principe de l'invention est valable et généralisable pour toute source 1 dont un milieu à gain (cristal laser, cristal non linéaire...) est contenu dans une cavité résonnante. Ces deux équations pourraient naturellement être exprimées en fréquence temporelle ou période temporelle ou longueur d'onde. Par exemple, dans le cas de l'équation 2 :

$$f_s = b' \, [ISLc'] \qquad \text{équation 2'}$$

$$t_s = b'' \, [ISLc''] \qquad \text{équation 2''}$$

$$\lambda_s = b''' \, [ISLc'''] \qquad \text{équation 2'''}$$

où :

- chacune parmi « b' » « b" » et « b‴ » est une constante, plus exactement un nombre réel supérieur ou égal à zéro
- $f_s$ est la fréquence temporelle du rayonnement 3
- [ISLc'] signifiant « modulo l'ISL de la cavité fixe ISLc'», ISLc' étant l'ISL de la cavité fixe exprimée avec les unités d'une fréquence temporelle (inverse d'un temps)
- $t_s$ est la période temporelle du rayonnement 3
- [ISLc"] signifiant « modulo l'ISL de la cavité fixe ISLc"», ISLc" étant l'ISL de la cavité fixe exprimée avec les unités d'une période temporelle (un temps)
- $\lambda_s$ est la longueur d'onde du rayonnement 3
- [ISLc‴] signifiant « modulo l'ISL de la cavité fixe ISLc‴», ISLc‴ étant l'ISL de la cavité fixe exprimée avec les unités d'une longueur d'onde (une longueur)

3) une réception d'au moins une partie du premier rayonnement 3 par l'au moins un capteur 4, et même par les plusieurs capteurs 4 dans le présent mode de réalisation.

4) une mesure d'un signal par chaque capteur 4 et pour chaque état exploré de la source 1, en fonction de l'au moins une partie du premier rayonnement 3 reçu par ce capteur 4 à cet état exploré de la source 1.

Les Fabry-Perot 51, 52, 53 sont dimensionnés de sorte que leur intervalle spectral libre (ISL) soit respectivement de 961,29 $\mu$m, 961,54 $\mu$m et 961,79 $\mu$m. Leur transmission en fonction du nombre d'onde dans la bande de gain paramétrique est décrite par la figure 2.

Sur la figure 2, a aussi été simulée l'intensité lue par chaque photodiode 6 pour chacun des modes de la figure 3 à laquelle a été ajouté un bruit blanc de 3 % de l'intensité maximum à $3 \times \sigma$, où $\sigma$ représente l'écart type du bruit.

5) une association ou synchronisation, par l'unité 11, de chaque état exploré de la source 1 avec le signal mesuré par chaque capteur 4 pour cet état exploré de la source 1,

6) une connaissance a priori de la constante «b» ; dans le cas d'une génération du premier rayonnement 3 par la source 1 selon différents états explorés de la source 1, la connaissance de la constante «b» peut provenir d'une détermination de cette constante «b», la détermination de cette constante «b» comprenant:

a. un calcul préliminaire de la première donnée $k_s$ représentative de la longueur d'onde du premier rayonnement 3 pour chaque état exploré de la source 1, le calcul comprenant, pour chaque état exploré de la source 1, une sélection d'une valeur de la première $k_s$ donnée parmi plusieurs valeurs possibles, ladite sélection comprenant :

i. une élimination des valeurs de la première donnée $k_s$ situées en dehors de l'intervalle 15 de zone spectrale du premier rayonnement 3. L'objectif est donc désormais de retrouver à partir des informations des photodiodes 6 les nombres d'onde $k_s$ du rayonnement 3 émis par la source 1 dans sa zone d'émission possible : de 6 662,5 $cm^{-1}$ à 6 667,5 $cm^{-1}$ soit 5 $cm^{-1}$. Pour atteindre une résolution de $2 \cdot 10^{-3}$ $cm^{-1}$, on échantillonne la zone d'émission 15 en 2500 points espacés de $2 \cdot 10^{-3}$ $cm^{-1}$. À chacun de ces points correspond un triplet de transmissions des trois photodiodes 6.

ii. une sélection de la valeur sélectionnée, de préférence par une méthode des moindres carrés. Si le nombre de capteurs 4 est égal à $N_C$, et que l'on choisit d'échantillonner la zone d'émission 15 avec $N_P$ points (plus $N_P$ est grand, meilleure sera la précision), pour chaque état de la source 1 on compare les $N_C$ signaux mesurés par les $N_C$ (ici $N_C$=3) capteurs 4 avec $N_P$ (ici $N_P$=2500) ensembles de valeurs théoriques ; chaque ensemble de valeurs théoriques comprend $N_C$ signaux théoriques des $N_C$ capteurs 4 et est associé à une valeur de $k_S$ selon la figure 2 ou une formule ou un tableau de valeurs équivalent, c'est-à-dire selon la transmission des $N_C$ Fabry Perot 51, 52, 53 en fonction du nombre d'onde $k_S$. Par la méthode des moindres carrés, on compare chacun des triplets mesurés aux 2500 triplets théoriques selon l'équation 3 :

$$m_j = \sqrt{[(T^j_{th1} - T_{m1})^2 + (T^j_{th2} - T_{m2})^2 + (T^j_{th3} - T_{m3})^2]} \qquad \text{équation 3}$$

où $T^j_{thi}$ correspond à la transmission théorique du i-ème Fabry-Perot (sur les 3 possibles) du j-ème triplet (sur les 2500 possibles), et $T_{mi}$ correspond à la transmission mesurée du i-ème Fabry-Perot. Pour chacun des triplets mesurés on retient la valeur de nombre d'onde $k_S$ du faisceau 3 parmi les 2500 possibilités, qui minimise la valeur de « $m_j$ ».

Ces nombres d'onde calculés $k_s$ sont présentés par à la figure 5. Malheureusement, le bruit de mesure perturbe le calcul et dégrade le résultat. La figure 6 présente la différence point à point entre le calcul et les nombres d'onde effectivement émis.

b. à partir du calcul préliminaire de la première donnée $k_s$ pour l'ensemble de différents états explorés de la source 1, une détermination de la constante «b». En effet, à partir de ces mesures bruitées de la figure 5, nous pouvons tout de même calculer précisément le « b » présenté à l'équation 2. En effet, le bruit de mesure est alors moyenné sur l'ensemble des 250 acquisitions. S'il s'agit d'un bruit blanc gaussien, le bruit est alors diminué d'un facteur supérieur à 15 ($\sqrt{250}$). Afin de limiter l'effet d'un nombre aberrant nous utilisons la médiane (med) plutôt que la moyenne. Nous avons ainsi :

$$b = \text{med}(k_s^{\text{mesurés}} [ISL_c]) \qquad \text{équation 4}$$

Dans notre exemple, b = 0,1404 $cm^{-1}$. Comme nous l'avons vu plus haut, nous savons maintenant que la source 1 ne peut émettre qu'à des nombres d'onde qui respectent l'équation 2 avec la valeur « b » que nous venons de calculer (équation 4).

Une autre alternative à la détermination de b serait de l'enregistrer (par exemple en usine) dans le dispositif 10, mais cela ne permet pas de prendre en compte les variations de b dues par exemple aux variations de température.

7) à partir des signaux mesurés et pour chaque état exploré de la source 1, un calcul de la première donnée $k_s$ représentative de la longueur d'onde du premier rayonnement 3 pour chaque état exploré de la source 1, le calcul comprenant, pour chaque état exploré de la source 1, une sélection d'une valeur sélectionnée de la première donnée $k_s$ parmi plusieurs valeurs possibles, ladite sélection comprenant :

a. une élimination des valeurs théoriques de la première donnée $k_s$ situées en dehors de l'intervalle 15 de zone spectrale du premier rayonnement 3, comme à l'étape 6.a.i précédente

b. une élimination des valeurs de la première donnée $k_s$ ne correspondant pas à une constante «b» modulo l'intervalle spectral libre de la cavité fixe 2 exprimé selon les unités de la première donnée. Si l'on choisit d'échantillonner la zone d'émission 15 avec $N_P$ points (plus $N_P$ est grand, meilleure sera la précision), on a $N_P$ (ici $N_P$=2500) ensembles de valeurs théoriques ; chaque ensemble de valeurs théoriques comprend $N_C$ signaux théoriques des $N_C$ capteurs 4 et est associé à une valeur de $k_S$ selon la figure 2 ou une formule ou un tableau de valeurs équivalent, c'est-à-dire selon la transmission des $N_C$ Fabry Perrot 51, 52, 53 en fonction du nombre d'onde $k_S$. Cette élimination des valeurs théoriques de la première donnée $k_s$ ne correspondant pas à une constante «b» modulo l'intervalle spectral libre de la cavité fixe 2 permet de réduire le nombre d'ensembles de valeurs théoriques de $N_P$ à $N_R$.

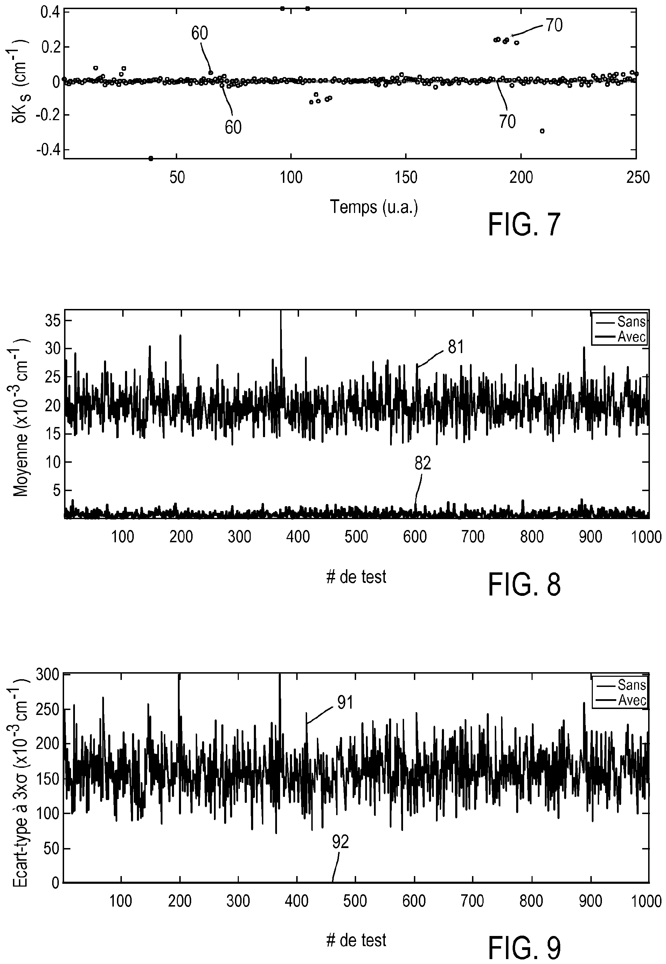

c. puis, après les deux précédentes éliminations, une sélection finale de la valeur sélectionnée, de préférence par une méthode des moindres carrés. On réutilise la méthode des moindres carrés en limitant les solutions possibles aux seuls nombres d'onde de la bande de gain paramétrique (zone spectrale 15) respectant l'équation 2. Si le nombre de capteurs 4 est égal à $N_C$, et qu'il reste $N_R$ (ici $N_R$=19) ensembles de valeurs théoriques possibles, alors pour chaque état de la source 1 on compare les $N_C$ signaux mesurés par les $N_C$ (ici $N_C$=3) capteurs 4 avec $N_R$ (ici $N_R$=19) ensembles de valeurs théoriques ; chaque ensemble de valeurs théoriques comprend $N_C$ signaux théoriques des $N_C$ capteurs 4 et est associé à une valeur de $k_S$ selon la figure 2 ou une formule ou un tableau de valeur équivalent, c'est-à-dire selon la transmission des $N_C$ Fabry Perrot 51, 52, 53 en fonction du nombre d'onde $k_S$. Ainsi contrairement à l'étape 6), nous n'avons plus le choix entre 2500 triplets possibles mais entre 19 modes possibles respectant la condition de modulo. Si b = 0, nous avons alors 20 modes possibles. On refait le calcul des « $m_j$ » de l'équation 3 pour les seuls 19 triplets possibles. La valeur de nombre d'onde retenue pour une mesure donnée est celle qui minimise « $m_j$ » parmi les 19 valeurs calculées. On obtient alors la figure 7 qui présente, en plus des résultats 60 (ronds éparpillés) présentés à la figure 6, les résultats 70 issus de ces nouveaux moindres carrés (étoiles quasiment toutes alignées).

La figure 7 est éloquente, le bruit est quasiment nul et seul un point de mesure est faux à un ISL près (mesure n° 196). Un filtre éliminant les points de mesures à proximité d'un saut de modes peut l'éliminer. Un tel filtre est connu pour la spectroscopie ; en effet, les points proches des sauts de modes reflètent une source qui n'est pas parfaitement pure spectralement. Ils sont donc filtrés pour garantir la qualité de la mesure indépendamment du mesureur de nombre d'onde.

Dans l'exemple décrit, on obtient alors les résultats présentés au tableau ci-dessous :

| | Sans modulo (points 60) | Avec modulo (points 70) |
|---|---|---|
| Erreur moyenne ($\times 10^{-3}$ cm$^{-1}$) | 22,9 | 0,04 |
| Écart-type ($3 \times \sigma$, $\times 10^{-3}$ cm$^{-1}$) | 19,2 | 0,0 |
| Pourcentage de mesures restantes après filtrage (%) | 70,4 | 69,2 |

Les résultats sont nettement meilleurs en utilisant la connaissance de l'ISL de la cavité fixe 2. Nous pouvons aussi voir que le filtrage ne supprime pas beaucoup plus de points de mesures lors qu'il est appliqué au premier calcul (sans utilisation du modulo) plutôt qu'au second. Dans les deux cas il reste environ 70 % des acquisitions.

La figure 8 et la figure 9 présentent les résultats suivants:

- erreur moyenne au premier calcul (référence 81, sans utilisation du modulo) et au second calcul (référence 82, avec utilisation du modulo de l'équation 2), et
- écart-type au premier calcul (référence 91, sans utilisation du modulo) et au second calcul (référence 92, avec utilisation du modulo de l'équation 2),

pour mille simulations de séquence de sauts de modes, le bruit étant aléatoire d'une séquence à l'autre.

La constante b est connue (par l'unité 11) au moment de cette étape d'élimination des valeurs de la première donnée $k_s$ ne correspondant pas à une constante «b» modulo l'intervalle spectral libre de la cavité fixe 2 du 7). La constante b peut par exemple, dans le procédé selon l'invention, être calculée ou déterminée (comme expliqué à l'étape 6) ci-dessus) ou enregistrée avant cette étape d'élimination des valeurs de la première donnée $k_s$ ne correspondant pas à une constante «b» modulo l'intervalle spectral libre de la cavité fixe 2 du 7). La constante b peut être saisie par exemple par un utilisateur avant cette étape d'élimination des valeurs de la première donnée $k_s$ ne correspondant pas à une constante «b» modulo l'intervalle spectral libre de la cavité fixe 2 du 7).

L'intervalle spectral libre de la cavité fixe 2 est connu (par l'unité 11) au moment de cette étape d'élimination des valeurs de la première donnée $k_s$ ne correspondant pas à une constante «b» modulo l'intervalle spectral libre de la cavité fixe 2 du 7). L'intervalle spectral libre de la cavité fixe 2 peut par exemple, dans le procédé selon l'invention, être enregistré avant l'étape d'élimination des valeurs de la première donnée $k_s$ ne correspondant pas à une constante «b» modulo l'intervalle spectral libre de la cavité fixe 2 du 7). L'intervalle spectral libre de la cavité fixe peut être saisi par exemple par un utilisateur avant l'étape d'élimination des valeurs de la première donnée $k_s$ ne correspondant pas à une constante «b» modulo l'intervalle spectral libre de la cavité fixe 2 du 7).

8) Dans ce mode de réalisation de procédé selon l'invention, la cavité mobile 7 génère le premier rayonnement 3 et la cavité fixe 2 génère le deuxième rayonnement 8. Ce procédé comprend en outre un calcul, pour chaque état exploré de la source, de la deuxième donnée $k_c$ représentative de la longueur d'onde du deuxième rayonnement 8 en fonction du calcul de la première donnée $k_s$ représentative de la longueur d'onde du premier rayonnement 3. Connaissant :

- la valeur de $k_p$ de la pompe, connue et maîtrisée, et qui a priori ne change pas lors des changements d'états de la source 1, et
- les différentes valeurs de $k_s$ calculées pour les différents états explorés de la source 1,

alors on calcul les différentes valeurs de $k_c$ calculées pour les différents états explorés de la source 1, avec l'équation :

$$k_c = k_p - k_s$$

Bien sûr, l'invention n'est pas limitée aux exemples qui viennent d'être décrits et de nombreux aménagements peuvent être apportés à ces exemples sans sortir du cadre de l'invention.

Ainsi, dans des variantes combinables entre elles des modes de réalisations précédemment décrits :

- le procédé selon l'invention ne calcule pas nécessairement la constante « b », qui peut être déjà connue (par exemple par une calibration en usine ou autre). Dans ce cas, le procédé ou dispositif selon l'invention peut être mis en œuvre en explorant qu'un seul état de la source 1, c'est-à-dire avec un seul point 70 de la figure 7 ;
- la source 1 peut ne comprendre qu'une seule cavité fixe 2, sans cavité mobile 7. Dans ce cas, la cavité 2 peut comprendre le cristal 9 entre les miroirs 2a et 2b fixes. L'intervalle spectral libre ISLc de la cavité 2 est toujours fixe ; on change l'état de la source 1 par exemple en changeant la température du cristal 9, et le dispositif et le procédé selon l'invention sont mis en œuvre cette fois ci sur la base de l'équation suivante : $k_c = b [ISLc]$, la constante b étant connue ou déterminée sur le même principe que précédemment décrit, et la première donnée étant $k_c$;
- le dispositif et le procédé selon l'invention peut être basé sur des mesures, par les capteurs 4, sur le signal de la cavité 2 plutôt que sur le signal de la cavité 7, dans un cas avec un miroir 2a ou 2b mobile et de préférence le miroir 7a fixe, par exemple en utilisant un gaz à la place d'un cristal 9 ;
- la première donnée n'est pas nécessairement le nombre d'onde; on peut aussi mettre en œuvre le dispositif et le procédé selon l'invention avec comme première donnée une fréquence temporelle, une période temporelle, ou une longueur d'onde du rayonnement reçu par l'au moins un capteur 4.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé de caractérisation d'une source optique (1), ladite source optique comprenant une cavité fixe (2) ayant un intervalle spectral libre, ledit procédé comprenant :

- une génération d'un premier rayonnement (3) par la source optique selon différents états explorés de la source optique, les différents états de la source optique (1) se distinguant par une différence d'un paramètre physique de la source optique (1) qui influe sur une longueur d'onde du premier rayonnement (3) émis par la source optique (1),
- une réception d'au moins une partie de ce premier rayonnement par au moins un capteur (4), chaque capteur comprenant un étalon Fabry Perot (5) suivi d'une photodiode (6),
- une mesure d'un signal par chaque capteur et pour chaque état exploré de la source optique, en fonction de l'au moins une partie du premier rayonnement reçu par ce capteur à cet état exploré de la source optique,
- à partir des signaux mesurés et pour chaque état exploré de la source optique, un calcul d'une première donnée représentative de la longueur d'onde du premier rayonnement, le calcul comprenant, pour chaque état exploré de la source optique, une sélection d'une valeur sélectionnée de la première donnée parmi plusieurs valeurs possibles, ladite sélection comprenant une élimination des valeurs de la première donnée ne correspondant pas à une constante (b) connue modulo l'intervalle spectral libre de la cavité fixe exprimé selon les unités de la première donnée.

**2.** Procédé selon la revendication 1, **caractérisé en ce que** chaque capteur ne comprend pas de barrette de photodiodes.

**3.** Procédé selon la revendication 1 ou 2, **caractérisé en ce que** l'étalon Fabry Perot de chaque capteur ne comprend aucune partie mobile.

**4.** Procédé selon l'une quelconque des revendications précédentes, **caractérisé en ce que** la première donnée illustrant la longueur d'onde du premier rayonnement est :

- la longueur d'onde du premier rayonnement, ou
- la fréquence du premier rayonnement, ou
- le nombre d'onde du premier rayonnement.

**5.** Procédé selon l'une quelconque des revendications précédentes, **caractérisé en ce que** ladite sélection élimine en outre les valeurs de la première donnée situées en dehors d'un intervalle (15) de zone spectrale du premier rayonnement.

**6.** Procédé selon la revendication 5, **caractérisé en ce que** chaque étalon Fabry Perot a une courbe de transmission (12, 13, 14) de l'intensité du premier rayonnement, en fonction de la longueur d'onde du premier rayonnement, ayant une période supérieure ou égale à l'intervalle de zone spectrale du premier rayonnement.

**7.** Procédé selon la revendication 5 ou 6, **caractérisé en ce que** la réception d'au moins une partie du premier rayonnement comprend une réception par plusieurs capteurs (4) comprenant chacun un étalon Fabry Perot (5) suivi d'une photodiode (6), chaque étalon Fabry Perot ayant une courbe de transmission de l'intensité du premier rayonnement en fonction de la longueur d'onde du premier rayonnement, l'assemblage des courbes de transmission des différents étalons Fabry Perot (5) formant une courbe globale (16) de transmission de l'intensité du premier rayonnement, en fonction de la longueur d'onde du premier rayonnement, ayant une période supérieure ou égale à l'intervalle de zone spectrale du premier rayonnement.

**8.** Procédé selon l'une quelconque des revendications précédentes, **caractérisé en ce que** l'au moins un capteur comprend plusieurs capteurs, les différents étalons Fabry Perot des différents capteurs comprenant aux moins un couple de deux étalons Fabry Perot dont :

- un premier étalon Fabry Perot ayant une première courbe de transmission de l'intensité du premier rayonnement, en fonction de la longueur d'onde du premier rayonnement, et
- un deuxième étalon Fabry Perot ayant une deuxième courbe de transmission de l'intensité du premier rayonnement, en fonction de la longueur d'onde du premier rayonnement,

de sorte que :

- une même longueur d'onde du premier rayonnement (3) correspond à la fois à un maximum de pente (130) de la première courbe de transmission (13) et à une pente (120) de la deuxième courbe de transmission (12) inférieure ou égale, en valeur absolue, à 10% de ce maximum de pente (130), et/ou
- une même longueur d'onde du premier rayonnement (3) correspond à la fois à un maximum de pente (121) de la deuxième courbe de transmission (12) et à une pente (131) de la première courbe de transmission (13) inférieure ou égale, en valeur absolue, à 10% de ce maximum de pente (121).

**9.** Procédé selon l'une quelconque des revendications précédentes, **caractérisé en ce qu'**il comprend, avant la sélection éliminant les valeurs de la première donnée ne correspondant pas à la constante (b) modulo l'intervalle spectral libre de la cavité fixe, une détermination ou une connaissance de la constante (b).

**10.** Procédé selon la revendications 9, **caractérisé en ce que** la détermination de la constante (b) comprend, dans le cas d'une génération du premier rayonnement (3) par la source selon différents états explorés de la source :

- un calcul préliminaire de la première donnée pour chaque état exploré de la source, et
- à partir du premier calcul préliminaire de la première donnée pour l'ensemble de différents états explorés de la source, une détermination de la constante (b).

11. Procédé selon l'une quelconque des revendications précédentes, **caractérisé en ce que** la sélection d'une valeur sélectionnée de la première donnée comprend, après l'élimination des valeurs de la première donnée ne correspondant pas à une constante (b) modulo l'intervalle spectral libre de la cavité, une sélection finale de la valeur sélectionnée, de préférence par une méthode des moindres carrés.

12. Procédé selon l'une quelconque des revendications précédentes, **caractérisé en ce que** la source est un oscillateur paramétrique optique ou un laser.

13. Procédé selon l'une quelconque des revendications précédentes, **caractérisé en ce que** la source est une source au moins doublement résonnante, comprenant deux cavités partageant un même cristal (9) de génération de rayonnement, dont:

    - une cavité mobile (7) générant le premier rayonnement (3), et
    - la cavité fixe (2) générant un deuxième rayonnement (8).

14. Procédé selon la revendication 13, **caractérisé en ce qu'**il comprend en outre un calcul, pour chaque état exploré de la source, d'une deuxième donnée représentative de la longueur d'onde du deuxième rayonnement en fonction du calcul de la première donnée représentative de la longueur d'onde du premier rayonnement.

15. Dispositif (10) de caractérisation d'une source optique (1), comprenant une cavité fixe (2) ayant un intervalle spectral libre, ledit dispositif comprenant :

    - une unité de calcul (11), agencée et/ou programmée pour commander dans quel état se trouve la source optique (1) et/ou recevoir des informations sur l'état de la source optique (1) ou les différents états explorés de la source optique (1), l'unité de calcul (11) étant agencée et/ou programmée pour connaitre une constante (b),
    - au moins un capteur (4), agencé pour recevoir au moins une partie du premier rayonnement (3) généré par la source selon différents états explorés de la source, chaque capteur comprenant un étalon Fabry Perot (5) suivi d'une photodiode (6), chaque capteur étant agencé pour mesurer un signal pour chaque état exploré de la source optique en fonction de l'au moins une partie du premier rayonnement reçu par ce capteur à cet état exploré de la source optique, les différents états de la source optique se distinguent par une différence d'un paramètre physique de la source optique qui influe sur une longueur d'onde du premier rayonnement émis par la source optique;
    l'unité de calcul (11) étant agencée et/ou programmée pour calculer, à partir des signaux mesurés par chaque capteur et pour chaque état exploré de la source optique, une première donnée représentative de la longueur d'onde du premier rayonnement, l'unité de calcul étant agencée et/ou programmée pour réaliser une sélection, pour chaque état exploré de la source optique, d'une valeur sélectionnée de la première donnée parmi plusieurs valeurs possibles, ladite sélection comprenant une élimination des valeurs de la première donnée ne correspondant pas à la constante (b) modulo un intervalle spectral libre exprimé selon les unités de la première donnée.

**Patentansprüche**

1. Verfahren zur Charakterisierung einer optischen Quelle (1), wobei die optische Quelle eine feste Kavität (2) mit einem freien Spektralbereich umfasst, wobei das Verfahren umfasst:

    - eine Erzeugung einer ersten Strahlung (3) durch die optische Quelle in verschiedenen untersuchten Zuständen der optischen Quelle, wobei sich die verschiedenen Zustände der optischen Quelle (1) durch einen Unterschied in einem physikalischen Parameter der optischen Quelle (1) unterscheiden, der eine Wellenlänge der ersten Strahlung (3) beeinflusst, die von der optischen Quelle (1) ausgesendet wird,
    - einen Empfang mindestens eines Teils dieser ersten Strahlung durch mindestens einen Sensor (4), wobei jeder Sensor ein Fabry-Perot-Etalon (5), gefolgt von einer Fotodiode (6), umfasst,
    - eine Messung eines Signals durch jeden Sensor und für jeden untersuchten Zustand der optischen Quelle, als Funktion des mindestens einen Teils der ersten Strahlung, die durch diesen Sensor in diesem untersuchten Zustand der optischen Quelle empfangen wird,

- eine Berechnung eines ersten Datenwerts, der für die Wellenlänge der ersten Strahlung repräsentativ ist, anhand der gemessenen Signale und für jeden untersuchten Zustand der optischen Quelle, wobei die Berechnung für jeden untersuchten Zustand der optischen Quelle eine Auswahl eines ausgewählten Werts des ersten Datenwerts aus mehreren möglichen Werten umfasst, wobei die Auswahl eine Eliminierung von Werten des ersten Datenwerts umfasst, die nicht einer bekannten Konstante (b) modulo des freien Spektralbereichs der festen Kavität, ausgedrückt gemäß den Einheiten des ersten Datenwerts, entsprechen.

2. Verfahren nach Anspruch 1, **dadurch gekennzeichnet, dass** jeder Sensor kein Photodiodenarray umfasst.

3. Verfahren nach Anspruch 1 oder 2, **dadurch gekennzeichnet, dass** das Fabry-Perot-Etalon jedes Sensors keine bewegbaren Teile enthält.

4. Verfahren nach einem der vorhergehenden Ansprüche, **dadurch gekennzeichnet, dass** der die Wellenlänge der ersten Strahlung angebende erste Datenwert ist:

   - die Wellenlänge der ersten Strahlung, oder
   - die Frequenz der ersten Strahlung oder
   - die Wellenzahl der ersten Strahlung.

5. Verfahren nach einem der vorhergehenden Ansprüche, **dadurch gekennzeichnet, dass** die Auswahl zusätzlich diejenigen Werte des ersten Datenwerts eliminiert, die außerhalb eines Intervalls (15) des Spektralbereichs der ersten Strahlung liegen.

6. Verfahren nach Anspruch 5, **dadurch gekennzeichnet, dass** jedes Fabry-Perot-Etalon eine Transmissionskurve (12, 13, 14) für die Intensität der ersten Strahlung als Funktion der Wellenlänge der ersten Strahlung aufweist, die eine Periode hat, die größer oder gleich dem Intervall des Spektralbereichs der ersten Strahlung ist.

7. Verfahren nach Anspruch 5 oder 6, **dadurch gekennzeichnet, dass** der Empfang mindestens eines Teils der ersten Strahlung einen Empfang durch mehrere Sensoren (4) umfasst, die jeweils ein Fabry-Perot-Etalon (5) gefolgt von einer Fotodiode (6) umfassen, wobei jedes Fabry-Perot-Etalon eine Transmissionskurve für die Intensität der ersten Strahlung als Funktion der Wellenlänge der ersten Strahlung aufweist, wobei die Zusammensetzung der Transmissionskurven von verschiedenen Fabry-Perot-Etalons (5) eine Gesamttransmissionskurve (16) für die Intensität der ersten Strahlung als Funktion der Wellenlänge der ersten Strahlung bildet, die eine Periode aufweist, die größer oder gleich dem Intervall des Spektralbereichs der ersten Strahlung ist.

8. Verfahren nach einem der vorhergehenden Ansprüche, **dadurch gekennzeichnet, dass** der mindestens eine Sensor mehrere Sensoren umfasst, wobei die verschiedenen Fabry-Perot-Etalons von verschiedenen Sensoren mindestens ein Paar von zwei Fabry-Perot-Etalons umfassen, darunter:

   - ein erstes Fabry-Perot-Etalon mit einer ersten Transmissionskurve für die Intensität der ersten Strahlung als Funktion der Wellenlänge der ersten Strahlung, und
   - ein zweites Fabry-Perot-Etalon mit einer zweiten Transmissionskurve für die Intensität der ersten Strahlung als Funktion der Wellenlänge der ersten Strahlung,

   derart, dass:

   - eine gleiche Wellenlänge der ersten Strahlung (3) einerseits einem Steigungsmaximum (130) der ersten Transmissionskurve (13) und andererseits einer Steigung (120) der zweiten Transmissionskurve (12) entspricht, die, im Absolutwert, kleiner oder gleich 10% dieses Steigungsmaximums (130) ist, und/oder
   - eine gleiche Wellenlänge der ersten Strahlung (3) einerseits einem Steigungsmaximum (121) der zweiten Transmissionskurve (12) und andererseits einer Steigung (131) der ersten Transmissionskurve (13) entspricht, die, im Absolutwert, kleiner oder gleich 10% dieses Steigungsmaximums (121) ist.

9. Verfahren nach einem der vorhergehenden Ansprüche, **dadurch gekennzeichnet, dass** es vor der Auswahl, welche diejenigen Werte der ersten Datenwerte eliminiert, die nicht der Konstante (b) modulo des freien Spektralbereichs der festen Kavität entsprechen, eine Bestimmung oder eine Kenntnis der Konstante (b) umfasst.

10. Verfahren nach Anspruch 9, **dadurch gekennzeichnet, dass** die Bestimmung der Konstante (b) im Fall einer Erzeugung der ersten Strahlung (3) durch die Quelle in verschiedenen untersuchten Zuständen der Quelle umfasst:

- eine vorläufige Berechnung des ersten Datenwerts für jeden untersuchten Zustand der Quelle, und
- eine Bestimmung der Konstante (b) aus der ersten vorläufigen Berechnung des ersten Datenwerts für den Satz von verschiedenen untersuchten Zuständen der Quelle.

**11.** Verfahren nach einem der vorhergehenden Ansprüche, **dadurch gekennzeichnet, dass** die Auswahl eines ausgewählten Werts des ersten Datenwerts nach der Eliminierung von Werten des ersten Datenwerts, die nicht einer Konstante (b) modulo des freien Spektralbereichs der Kavität entsprechen, eine abschließende Auswahl des ausgewählten Werts, vorzugsweise durch eine Methode der kleinsten Quadrate, umfasst.

**12.** Verfahren nach einem der vorhergehenden Ansprüche, **dadurch gekennzeichnet, dass** die Quelle ein optischer parametrischer Oszillator oder ein Laser ist.

**13.** Verfahren nach einem der vorhergehenden Ansprüche, **dadurch gekennzeichnet, dass** die Quelle eine mindestens doppelt resonante Quelle ist, die zwei Kavitäten umfasst, die sich einen gemeinsamen Kristall (9) zur Erzeugung der Strahlung teilen, darunter:

- eine bewegbare Kavität (7), die die erste Strahlung (3) erzeugt, und
- die feste Kavität (2), die eine zweite Strahlung (8) erzeugt.

**14.** Verfahren nach Anspruch 13, **dadurch gekennzeichnet, dass** es ferner eine Berechnung eines zweiten Datenwerts, der für die Wellenlänge der zweiten Strahlung repräsentativ ist, für jeden untersuchten Zustand der Quelle als Funktion der Berechnung des ersten Datenwerts, der für die Wellenlänge der ersten Strahlung repräsentativ ist, umfasst.

**15.** Vorrichtung (10) zur Charakterisierung einer optischen Quelle (1), die eine feste Kavität (2) mit einem freien Spektralbereich umfasst, wobei die Vorrichtung umfasst:

- eine Berechnungseinheit (11), die dazu eingerichtet und/oder programmiert ist, zu steuern, in welchem Zustand sich die optische Quelle (1) befindet, und/oder Informationen über den Zustand der optischen Quelle (1) oder die verschiedenen untersuchten Zustände der optischen Quelle (1) zu empfangen, wobei die Berechnungseinheit (11) dazu eingerichtet und/oder programmiert ist, eine Konstante (b) zu kennen,
- mindestens einen Sensor (4), der dazu eingerichtet ist, mindestens einen Teil der ersten Strahlung (3) zu empfangen, die von der Quelle in verschiedenen untersuchten Zuständen der Quelle erzeugt wird, wobei jeder Sensor ein Fabry-Perot-Etalon (5), gefolgt von einer Fotodiode (6), umfasst, wobei jeder Sensor dazu eingerichtet ist, ein Signal für jeden untersuchten Zustand der optischen Quelle als Funktion von mindestens einem Teil der ersten Strahlung zu messen, die von diesem Sensor in diesem untersuchten Zustand der optischen Quelle empfangen wird, wobei die verschiedenen Zustände der optischen Quelle sich durch einen Unterschied in einem physikalischen Parameter der optischen Quelle unterscheiden, der eine Wellenlänge der ersten Strahlung beeinflusst, die von der optischen Quelle ausgesendet wird; wobei die Berechnungseinheit (11) dazu eingerichtet und/oder programmiert ist, aus den von jedem Sensor gemessenen Signalen und für jeden untersuchten Zustand der optischen Quelle einen ersten Datenwert zu berechnen, der für die Wellenlänge der ersten Strahlung repräsentativ ist, wobei die Berechnungseinheit dazu eingerichtet und/oder programmiert ist, für jeden untersuchten Zustand der optischen Quelle eine Auswahl eines ausgewählten Werts des ersten Datenwerts aus mehreren möglichen Werten durchzuführen, wobei die Auswahl eine Eliminierung von Werten des ersten Datenwerts umfasst, die nicht der Konstante (b) modulo eines freien Spektralbereichs, ausgedrückt gemäß den Einheiten des ersten Datenwerts, entsprechen.

## Claims

**1.** Method for characterizing an optical source (1), said optical source comprising a fixed cavity (2) having a free spectral range, said method comprising:

- generating a first radiation (3) by the optical source according to different explored states of the optical source, the different states of the optical source (1) being distinguished by a difference of a physical parameter of the optical source (1) which has an influence on the wavelength of the first radiation (3) emitted by the optical source (1),
- receiving at least a part of this first radiation by at least one sensor (4), each sensor comprising a Fabry-Perot etalon (5) followed by a photodiode (6),
- measuring a signal by each sensor and for each explored state of the optical source, as a function of the at least one part of the first radiation received by this sensor at this explored state of the optical source,
- starting from the measured signals and for each explored state of the optical source, calculating a first data item representative of the wavelength of the first radiation, the calculation comprising, for each explored state of the optical source, selecting a selected value of the first data item from among several possible values, said selection comprising eliminating values of the first data item that do not correspond to a known constant (b) modulo the free spectral range of the fixed cavity expressed in the units of the first data item.

2. Method according to claim 1, **characterized in that** each sensor does not comprise a photodiode array.

3. Method according to claim 1 or 2, **characterized in that** the Fabry-Perot etalon of each sensor does not comprise any moving part.

4. Method according to any one of the preceding claims, **characterized in that** the first data item illustrating the wavelength of the first radiation is:

   - the wavelength of the first radiation, or
   - the frequency of the first radiation, or
   - the wave number of the first radiation.

5. Method according to any one of the preceding claims, **characterized in that** said selection also eliminates the values of the first data item situated outside a spectral area range (15) of the first radiation.

6. Method according to claim 5, **characterized in that** each Fabry-Perot etalon has a transmission curve (12, 13, 14) of the intensity of the first radiation, as a function of the wavelength of the first radiation, having a period that is greater than or equal to the range of the spectral area of the first radiation.

7. Method according to claim 5 or 6, **characterized in that** receiving at least a part of the first radiation comprises reception by several sensors (4), each comprising a Fabry-Perot etalon (5) followed by a photodiode (6), each Fabry-Perot etalon having a transmission intensity curve of the first radiation as a function of the wavelength of the first radiation, the transmission curves of the different Fabry-Perot etalons (5) together forming an overall transmission intensity curve (16) of the first radiation, as a function of the wavelength of the first radiation, having a period that is greater than or equal to the spectral area range of the first radiation.

8. Method according to any one of the preceding claims, **characterized in that** the at least one sensor comprises several sensors, the different Fabry-Perot etalons of the different sensors comprising at least one pair of two Fabry-Perot etalons including:

   - a first Fabry-Perot etalon having a first transmission intensity curve of the first radiation, as a function of the wavelength of the first radiation, and
   - a second Fabry-Perot etalon having a second transmission intensity curve of the first radiation, as a function of the wavelength of the first radiation,

   such that:

   - one and the same wavelength of the first radiation (3) corresponds to both a maximum slope (130) of the first transmission curve (13) and a slope (120) of the second transmission curve (12) that is less than or equal to, in absolute value, 10% of this maximum slope (130), and/or
   - one and the same wavelength of the first radiation (3) corresponds to both a maximum slope (121) of the second transmission curve (12) and a slope (131) of the first transmission curve (13) that is less than or equal to, in absolute value, 10% of this maximum slope (121).

9. Method according to any one of the preceding claims, **characterized in that** it comprises, before performing the selection eliminating the values of the first data item not corresponding to the constant (b) modulo the free spectral range of the fixed cavity, determining or knowledge of the constant (b).

**10.** Method according to claim 9, **characterized in that** determining the constant (b) comprises, in the case of generation of the first radiation (3) by the source according to different explored states of the source:

- a preliminary calculation of the first data item for each explored state of the source, and
- starting from the first preliminary calculation of the first data item for all of the different explored states of the source, determination of the constant (b).

**11.** Method according to any one of the preceding claims, **characterized in that** selecting a selected value of the first data item comprises, after elimination of the values of the first data item not corresponding to a constant (b) modulo the free spectral range, a final selection of the selected value, preferably by a least squares method.

**12.** Method according to any one of the preceding claims, **characterized in that** the source is an optical parametric oscillator or a laser.

**13.** Method according to any one of the preceding claims, **characterized in that** the source is an at least doubly resonant source, comprising two cavities sharing one and the same radiation-generating crystal (9), including:

- a moveable cavity (7) generating the first radiation (3), and
- the fixed cavity (2) generating a second radiation (8).

**14.** Method according to claim 13, **characterized in that** it also comprises a calculation, for each explored state of the source, of a second data item representative of the wavelength of the second radiation as a function of the calculation of the first data item representative of the wavelength of the first radiation.

**15.** Device (10) for characterizing an optical source (1), comprising a fixed cavity (2) having a free spectral range said device comprising:

- a calculation unit (11), arranged and/or programmed in order to control in what state the optical source (1) is found and/or to receive items of information on the state of the optical source (1) or the different explored states of the optical source (1), the calculation unit (11) being arranged and/or programmed in order to know a constant (b),
- at least one sensor (4), arranged in order to receive at least a part of the first radiation (3) generated by the source according to different explored states of the source, each sensor comprising a Fabry-Perot etalon (5) followed by a photodiode (6), each sensor being arranged in order to measure a signal for each explored state of the source as a function of the at least one part of the first radiation received by this sensor at this explored state of the optical source, the different states of the optical source being distinguished by a difference of a physical parameter of the optical source which has an influence on the wavelength of the first radiation emitted by the optical source ;

the calculation unit (11), being arranged and/or programmed in order to calculate, from the signals measured by each sensor and for each explored state of the optical source, a first data item representative of the wavelength of the first radiation, the calculation unit being arranged and/or programmed in order to carry out a selection, for each explored state of the optical source, of a selected value of the first data item from among several possible values, said selection comprising eliminating values of the first data item that do not correspond to the constant (b) modulo the free spectral range expressed in the units of the first data item.

FIG. 1

FIG. 2

FIG. 3

FIG. 4

FIG. 5

FIG. 6

FIG. 7

FIG. 8

FIG. 9

**EP 3 485 248 B1**

## RÉFÉRENCES CITÉES DANS LA DESCRIPTION

**Documents brevets cités dans la description**

- US 6498800 B

- US 2006215167 A